# FASCICULE DE BREVET EUROPEEN

(11) **EP 4 280 001 B1**
(45) Date de publication et mention de la délivrance du brevet: **18.02.2026**
(21) Numéro de dépôt: 22174689.4
(22) Date de dépôt: 20.05.2022
(51) Int. Cl.: G04C 10/02

(54) **PIÈCE TEXTILE ADAPTÉE À ALIMENTER EN COURANT ÉLECTRIQUE UN DISPOSITIF ÉLECTRONIQUE D'UN ARTICLE DE MODE**
TEXTILTEIL, DAS GEEIGNET IST, EINE ELEKTRONISCHE VORRICHTUNG EINES MODEARTIKELS MIT ELEKTRISCHEM STROM ZU VERSORGEN
TEXTILE PART ADAPTED FOR SUPPLYING ELECTRIC CURRENT TO AN ELECTRONIC DEVICE OF A FASHION ITEM

(43) Date de publication de la demande: 22.11.2023
(73) Titulaire: The Swatch Group Research and Development Ltd, 2074 Marin (CH)
(72) Inventeur: MARINAKIS, Nathalie, 2074 Marin-Epagnier (CH); FRANÇOIS, Nicolas, 2000 Neuchâtel (CH); JORNOD, Alain, 2000 Neuchâtel (CH)
(74) Mandataire: ICB SA

(56) Documents cités:
- DHARMASENA R D I G ET AL: "Energy Scavenging and Powering E-Skin Functional Devices", PROCEEDINGS OF THE IEEE, IEEE. NEW YORK, US, vol. 107, no. 10, 1 October 2019 (2019-10-01), pages 2118 - 2136, XP011748873, ISSN: 0018-9219, [retrieved on 20191003], DOI: 10.1109/JPROC.2019.2929286
- KOMOLAFE ABIODUN ET AL: "E-Textile Technology Review-From Materials to Application", IEEE ACCESS, IEEE, USA, vol. 9, 2 July 2021 (2021-07-02), pages 97152 - 97179, XP011865966, DOI: 10.1109/ACCESS.2021.3094303
- GONG SHU ET AL: "Toward Soft Skin-Like Wearable and Implantable Energy Devices", vol. 7, no. 23, 17 July 2017 (2017-07-17), DE, pages 1700648, XP055885176, ISSN: 1614-6832, Retrieved from the Internet <URL:https://onlinelibrary.wiley.com/doi/full-xml/10.1002/aenm.201700648> DOI: 10.1002/aenm.201700648
- ZHANG WANGLIN ET AL: "Spheres Multiple Physical Network-Based Triboelectric Materials for Self-Powered Contactless Sensing", SMALL, vol. 18, no. 25, 19 May 2022 (2022-05-19), Hoboken, USA, XP093309546, ISSN: 1613-6810, Retrieved from the Internet <URL:https://onlinelibrary.wiley.com/doi/full-xml/10.1002/smll.202200577> DOI: 10.1002/smll.202200577

## Description

L'invention relève de manière générale du domaine des appareils
électroniques portables, et notamment du domaine des articles de mode. L'état de l'art antérieur inclus les exemples comme divulgués dans "Energy Scavenging and Powering E-Skin Functional Devices" de Dharmasena R.D.I.G. et al. paru dans Proceedings of the IEEE, vol. 107, No. 10, October 2019, XP011748873, DOI:10.1109/JPROC.2019.2929286.

Plus particulièrement, l'invention concerne une pièce textile adaptée à générer un courant électrique, à le stocker et à alimenter un dispositif électronique d'un article de mode.

Dans le présent texte, l'article de mode selon l'invention est décrit dans une de ses applications préférées dans laquelle il prend la forme d'une bande, notamment de brins d'un bracelet destiné à être porté au poignet d'un utilisateur.

### Arrière-plan technologique

Les appareils électroniques portables sont alimentés en énergie électrique par une source d'énergie électrique, telle qu'une batterie ou une pile.

Parmi les appareils électroniques, les articles de mode comportant un dispositif électronique, tels que les lunettes, les casques audio, les bracelets, les montres, etc. sont souvent équipés d'une batterie rechargeable. Une telle batterie a pour avantage notamment de ne pas devoir être remplacée lorsqu'elle est déchargée, contrairement à une pile primaire.

Toutefois, les batteries ont pour inconvénient lors de leur rechargement d'impliquer une immobilisation des appareils électroniques portables qui les comportent durant une durée plus ou moins importante.

La présente invention propose une solution pour pallier notamment ce problème.

De façon plus générale, la présente invention propose une solution permettant de générer et de stocker de l'énergie électrique afin d'alimenter en courant électrique un dispositif électronique d'un article de mode.

### Résumé de l'invention

À cet effet, la présente invention concerne une pièce textile comportant au moins deux couches textiles superposées l'une à l'autre et composées chacune de fibres, lesdites couches étant formées par :
- au moins une couche génératrice d'énergie, dite « couche génératrice interne », configurée pour générer un courant électrique à partir de contraintes mécaniques, et
- une couche de stockage d'énergie destinée à alimenter un dispositif électronique en courant électrique, ladite couche de stockage étant reliée électriquement à la couche génératrice et configurée pour stocker le courant électrique.

Avantageusement, la pièce textile comprend au moins une fibre d'excitation comportant des billes solidaires d'un corps de ladite fibre, ladite fibre d'excitation étant tissée avec la couche génératrice interne. Le terme « solidaire » définit ici une liaison entre les billes et le corps avec ou sans degrés de liberté.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la pièce textile comprend une couche génératrice externe configurée pour générer un courant électrique à partir d'un rayonnement lumineux. La couche génératrice externe est superposée à la couche génératrice interne, elle-même étant superposée à la couche de stockage, lesdites couches génératrices externe et interne étant reliées électriquement à la couche de stockage.

Dans des modes particuliers de réalisation, la couche génératrice externe comprend un ensemble de fibres constituant des cellules solaires à pigment photosensible et des fibres conductrices avec lesquelles sont tissées lesdites fibres constituant des cellules solaires.

Dans des modes particuliers de réalisation, la couche génératrice interne est formée par un ensemble de nano-générateurs triboélectriques comprenant des ensembles actifs tissés avec des fibres conductrices.

Dans des modes particuliers de réalisation, la couche de stockage est constituée d'un ensemble de fibres formées par des batteries comprenant chacune une cathode filiforme et une anode filiforme.

Selon un autre aspect, la présente invention concerne un article de mode comprenant une pièce textile et un dispositif électronique configuré pour être alimenté en courant électrique par la couche de stockage.

Dans des modes particuliers de réalisation, la couche de stockage comporte un système de couplage inductif afin d'alimenter en courant électrique le dispositif électronique.

Selon encore un autre aspect, la présente invention concerne une montre comprenant un bracelet formé par au moins une pièce textile telle que précédemment décrite, et un mouvement horloger électronique ou électromécanique auquel est reliée la couche de stockage afin d'alimenter ledit mouvement horloger en courant électrique.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement une vue de section d'une pièce textile selon un exemple préféré de réalisation de la présente invention,
- la figure 2 représente schématiquement une vue éclatée de la pièce textile de la figure 1,
- la figure 3 représente schématiquement une vue en perspective d'une couche génératrice externe de la pièce textile de la figure 1, dans un exemple de réalisation de l'invention,
- la figure 4 représente schématiquement une vue en coupe de la couche génératrice externe de la figure 3,
- la figure 5 représente schématiquement une vue en perspective d'une couche génératrice interne de la pièce textile de la figure 1, dans un exemple de réalisation de l'invention,
- la figure 6 représente schématiquement une vue en perspective d'une fibre d'une couche de stockage de la pièce textile de la figure 1, dans un exemple de réalisation de l'invention.

On note que les figures ne sont pas à l'échelle.

### Description détaillée de l'invention

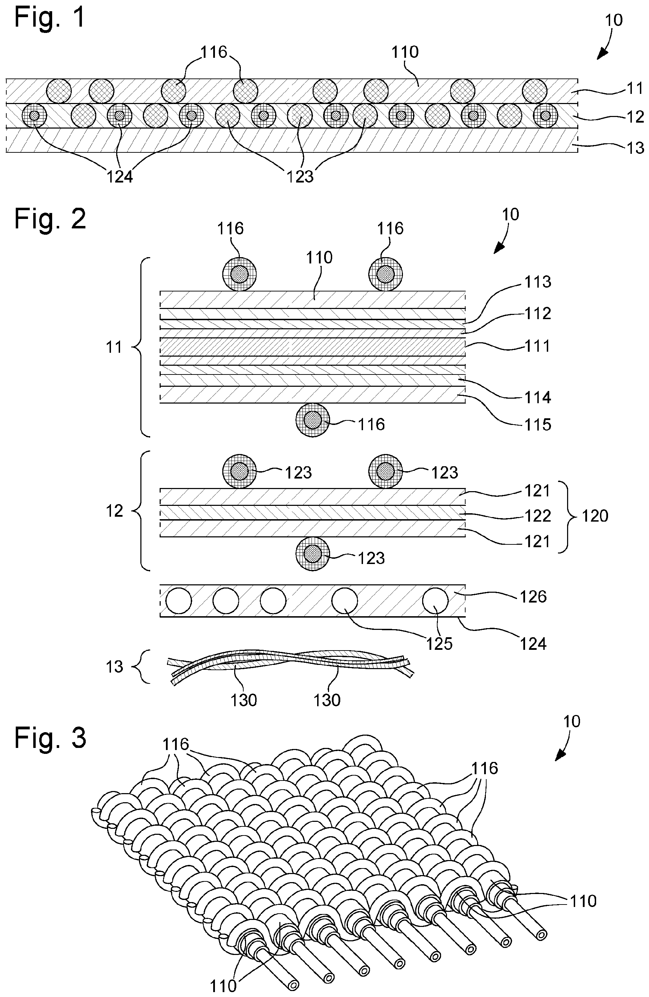

La figure 1 montre une vue schématique de section d'une pièce textile 10 selon l'invention. Cette pièce textile 10 est destinée à faire partie d'un article de mode (non représenté sur les figures) comportant un dispositif électronique destiné à être alimenté en courant électrique.

La pièce textile 10 comporte au moins deux couches textiles superposées l'une à l'autre et composées chacune de fibres. Le terme « fibre » est, dans le présent texte, défini comme désignant un élément filiforme et flexible, c'est à dire souple.

En particulier, les couches sont formées au moins par une couche génératrice 11, 12 d'énergie électrique configurée pour générer un courant électrique à partir d'un rayonnement lumineux ou à partir de contraintes mécaniques auxquelles elle est soumise, et par une couche de stockage 13 d'énergie reliée électriquement à la couche génératrice 11, 12 et configurée pour stocker l'énergie électrique générée par ladite couche génératrice 11, 12.

Dans l'exemple préféré de réalisation de la présente invention, la pièce textile 10 comporte deux couches génératrices 11 et 12, parmi lesquelles une couche génératrice externe 11 est configurée pour générer un courant électrique à partir d'un rayonnement lumineux, et une couche génératrice interne 12 est configurée pour générer un courant électrique à partir de contraintes mécaniques auxquelles elle est soumise.

Les termes relatifs « externe » et « interne » font ici référence à la position des couches par rapport à l'environnement extérieur lorsque la pièce textile 10 est utilisée, la couche génératrice externe 11 étant superposée à la couche génératrice interne 12.

Comme le montrent les figures 1 et 2, la couche génératrice interne 12 est superposée à la couche de stockage 13. Avantageusement, les couches génératrices externe 11 et interne 12 sont reliées électriquement à ladite couche de stockage 13, de sorte à l'alimenter en courant électrique qu'elles produisent.

La couche de stockage 13 est configurée pour alimenter le dispositif électronique de l'article de mode en courant électrique pour son fonctionnement. La couche de stockage 13 peut comporter un système de couplage inductif permettant de transmettre de l'énergie sans fil au dispositif électronique ou peut être connectée par des fibres dédiées.

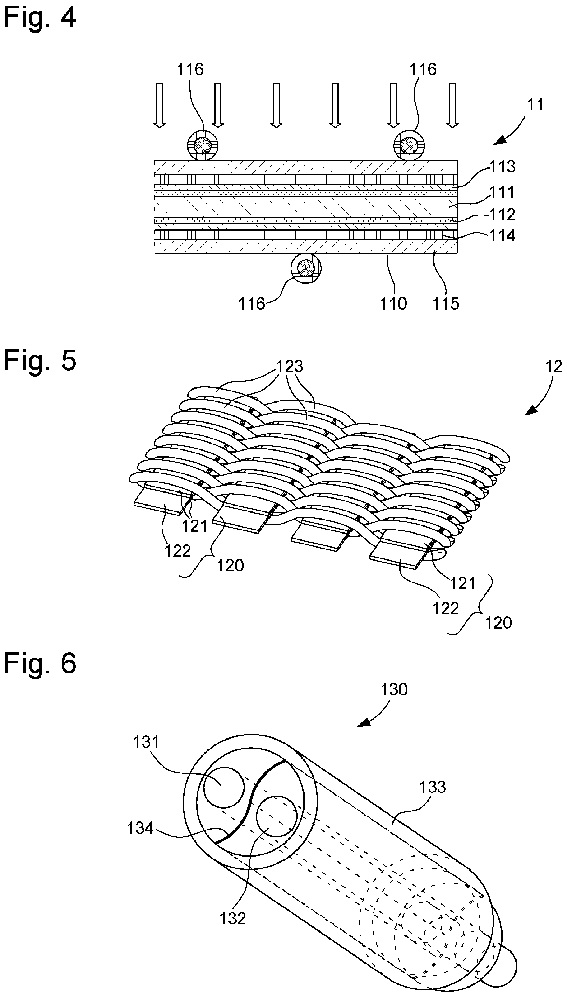

Préférentiellement, la couche génératrice externe 11 comprend un ensemble de fibres constituant des cellules solaires 110 à pigment photosensible, aussi connues par l'homme du métier sous l'acronyme en langue anglaise « DSSC » pour « Dye-Sensitized Solar Cell ». Les cellules solaires 110 sont représentées en détail sur les figures 3 et 4 et sont destinées à être soumises à un rayonnement lumineux représenté par des flèches sur la figure 4.

Comme le montrent les figures 2 et 4, chaque fibre de la couche génératrice externe 11 constituant une cellule solaire 110 comprend, dans l'exemple préféré de réalisation de l'invention, un fil de polymère 111, préférentiellement réalisé en polybutylène téréphtalate, enrobé d'une couche mince de cuivre 112, par exemple dont l'épaisseur est comprise entre 0,2 et 0,3 millimètres. La couche mince de cuivre 112 est recouverte d'une couche de manganèse 113, elle-même recouverte d'une couche de matériau semi-conducteur 114, tel que de l'oxyde de zinc, sensibilisée avec un chromophore choisi par exemple parmi les complexes polypyridyle de ruthénium, tel que le N719. Les couches de cuivre 112 et de matériau semi-conducteur 114 ont pour fonction de constituer l'anode de la cellule solaire 110. La couche de matériau semi-conducteur 114 est recouverte d'une couche transporteuse de trous 115, par exemple réalisée en iodure de cuivre.

La couche génératrice externe 11 comporte, en outre, des fibres conductrices 116 formant des cathodes, avec lesquelles sont tissées les fibres constituant des cellules solaires 110, comme le montrent en particulier les figures 2 à 4. Les fibres conductrices sont préférentiellement réalisées en cuivre ou en aluminium, ou plus généralement dans tout matériau conducteur électrique approprié.

La couche génératrice externe 11 peut être configurée de sorte que les fibres constituant les cellules solaires 110 soient agencées en série, ce qui a pour effet d'augmenter la tension générée par les cellules solaires 110. Alternativement, la couche génératrice externe 11 peut être configurée de sorte que les fibres constituant les cellules solaires 110 soient agencées en parallèle, ce qui a pour effet d'augmenter le courant produit par les cellules solaires 110.

Dans d'autres exemples de réalisation de l'invention, les cellules solaires 110 peuvent être du type cellule solaire organique, aussi connu par l'homme du métier sous l'acronyme en langue anglaise « OPVC » pour « Organic Photovoltaic Cells », du type cellule solaire multi-jonction à concentration.

Dans l'exemple préféré de réalisation de l'invention, la couche génératrice interne 12 comprend un ensemble de nano-générateurs triboélectriques, également connus sous l'acronyme en langue anglaise « TENG » pour « Triboelectric Nanogenerator », tel que représenté sur la figure 5.

Plus précisément, la pluralité de nano-générateurs triboélectriques comprend des ensembles actifs 120 sous forme de lames composées de deux lamelles de polytétrafluoroéthylène 121, également connu par l'homme du métier sous l'acronyme « PTFE », superposées l'une à l'autre et entre lesquelles est interposée une lamelle conductrice 122 électrique. Les nano-générateurs triboélectriques comportent également des fibres conductrices 123 avec lesquelles sont tissés les ensembles actifs 120, comme le montrent les figures 2 et 5. Les lamelles de PTFE 121 constituent des électrodes de la couche génératrice interne 12.

La lamelle 122 est préférentiellement réalisée en cuivre, et peut de manière générale être réalisées dans tout matériau conducteur électrique approprié.

Les ensembles actifs 120 sont mobiles par rapport aux fibres conductrices 123. Le frottement des lamelles de PTFE 121 contre les fibres conductrices 123 génère la production d'un courant électrique.

Avantageusement, la lamelle conductrice 122 présente au moins un degré de mobilité par rapport aux lamelles de polytétrafluoroéthylène 121, de sorte à augmenter la production de courant électrique.

A titre d'exemple, la couche génératrice interne 12 peut comporter une vingtaine d'ensembles actifs 120. Par ailleurs, l'épaisseur des lamelles de PTFE 121 et conductrice 122 peut être de quelques dizaines de micromètres, par exemple d'environ 30 micromètres, de même que le diamètre des fibres conductrices 123.

Dans d'autres exemples de réalisation de l'invention, les ensembles actifs 120 peuvent être sous forme tubulaire de section droite circulaire, et être composés d'une âme tubulaire en cuivre enveloppée par un tube réalisé en PTFE.

Lorsque la pièce textile 10 est soumise à une contrainte mécanique tendant à la déformer, par exemple une contrainte de flexion, de torsion, de compression ou de traction, la différence d'affinité électronique entre le cuivre et le PTFE vas induire un transfert de charges qui conduira à charger les fibres conductrices 123 positivement et les lamelles de PTFE 121 négativement. Lorsque la sollicitation mécanique de la pièce textile 10 cesse, la séparation des charges entre les fibres conductrices 123 et les lamelles de PTFE 121 induite par la déformation mécanique, conduit à un flux d'électrons des lamelles de PTFE 121 vers les fibres conductrices 123.

Avantageusement, la couche génératrice interne 12 est soumise, du fait de son agencement entre les couches génératrice externe 11 et de stockage 13, à davantage de sollicitations mécanique, et présente donc une production de courant électrique relativement importante. Plus particulièrement, la couche génératrice interne 12 est soumise à des frottements générés à la fois par la couche génératrice externe 11 et par la couche de stockage 13 lorsque la pièce textile 10 est déformée.

Avantageusement, afin d'augmenter encore le rendement énergétique de la pièce textile 10, des fibres d'excitation 124 comportant chacune des billes 125 mobiles par rapport à un corps 126 de ladite fibre sont tissées avec la couche génératrice interne 12.

Les billes 125 des fibres d'excitation 124 peuvent, alternativement, être fixées sans degré de liberté par rapport au corps 126.

La fibre d'excitation 124 est configurée pour augmenter les sollicitations de la couche génératrice interne 12.

Les billes 125 peuvent être agencées dans le corps 126 qui présente alors une forme tubulaire creuse, comme le représente schématiquement la figure 2.

De façon additionnelle, la couche génératrice interne 12 comprend un ensemble de composants présentant des propriétés thermoélectriques de sorte à constituer un générateur thermoélectrique.

Dans encore d'autres exemples de réalisation de l'invention, la couche génératrice interne 12 peut également comprendre un ensemble de composants présentant des propriétés piézoélectriques.

Grâce à la combinaison des couches génératrices externe 11 et interne 12, la production d'énergie de la pièce textile 10 peut être relativement importante au regard du courant électrique nécessaire pour alimenter le dispositif électronique, notamment dans une application de la présente invention dans laquelle la pièce textile 10 forme un brin d'un bracelet d'une montre et dans laquelle le dispositif électronique est un mouvement horloger électronique ou électromécanique de la montre.

Il est également envisageable que la pièce textile 10 comporte plusieurs couches génératrices internes 12. Notamment, dans une variante de l'exemple préféré de réalisation de l'invention, deux couches génératrices internes 12 comprenant chacune un ensemble de nano-générateurs triboélectriques, peuvent être superposées l'une à l'autre afin d'augmenter la production du courant de la pièce textile 10.

Dans un exemple de réalisation de l'invention, la couche de stockage 13 est constituée d'un ensemble de fibres formées par des batteries 130 comprenant chacune une cathode 131 filiforme réalisée à partir de nanotubes de carbone combinés à de la poudre de phosphate de fer lithié, et une anode 132 filiforme réalisée à partir de nanotubes de carbones combinés à de la poudre de titanate de lithium. Comme le montre la figure 6, l'anode 132 et la cathode 131 sont chacune torsadées et sont enrobées ensemble dans un électrolyte gélifié au sein d'un gaine 133 thermo-rétractable constituant le corps de la fibre. L'anode 132 et la cathode 131 sont séparées l'une de l'autre par un élément séparateur 134.

Dans un autre exemple de réalisation de l'invention, la cathode 131 et l'anode 132 peuvent être formées respectivement par de la poudre de titanate de lithium et de lithium manganèse sur un substrat de nanotubes de carbone multi-feuillets. A titre d'exemple, le diamètre de la cathode 131 et celui de l'anode 132 sont d'environ 130 et 70 micromètres respectivement.

La couche de stockage 13 peut comporter une dizaine de batteries 130. Un tel nombre de batterie est particulièrement adapté pour le stockage et la restitution d'énergie électrique pour alimenter un mouvement horloger électronique ou électromécanique d'une montre.

La couche de stockage 13 est reliée électriquement à chacune des couches génératrice externe 11 et interne 12 afin d'être chargée en courant électrique par ces dernières. La couche de stockage 13 est également reliée électriquement au dispositif électronique afin de pouvoir, en se déchargeant, l'alimenter en courant électrique.

Avantageusement, les fibres formées par des batteries 130 sont tissées ou tricotées les unes avec les autres, et/ou avec la couche génératrice interne 12.

Dans l'exemple préféré de réalisation de l'invention, la pièce textile 10 peut présenter une épaisseur de quelques millimètres, par exemple de 2 millimètres. La pièce textile 10 peut comporter des fibres structurelles, par exemple réalisées en polymère, tissées avec les couches génératrices externe 11 et interne 12 et la couche de stockage 13 afin de solidariser lesdites couches entre elles.

Dans une application avantageuse de la présente invention, l'article de mode dans lequel la pièce textile 10 est destinée à faire partie est une montre comportant un mouvement horloger électronique ou électromécanique destiné à être alimenté en courant électrique.

La montre comprend un bracelet formé par au moins une pièce textile 10, et le mouvement horloger est relié à la couche de stockage 13 afin d'être alimenté en courant électrique pour son fonctionnement. Plus particulièrement, à titre d'exemple, le bracelet peut comporter deux brins chacun formé par une pièce textile 10, chacun des brins étant connecté au mouvement.

Dans un exemple de réalisation de l'invention, chaque brin comporte à son extrémité proximale, c'est-à-dire son extrémité par laquelle le brin est destiné à être fixé à une boite de montre, des connecteurs reliés à la couche de stockage 13. De façon complémentaire, la montre comporte une boite sur le chant de laquelle débouche des connecteurs de boite destinés à être agencés en regard des connecteurs de chacun des brins de sorte que ces derniers reposent contre respectivement lesdits connecteurs de boite.

Lorsque la montre est portée par un utilisateur, la couche génératrice externe 11 est donc la couche la plus proche de l'environnement extérieur et la couche de stockage 13 est la couche la plus proche de l'utilisateur.

La description de l'invention est réalisée dans le cadre d'une application de l'invention à un article de mode formé par une montre. Toutefois, il va de soi que l'invention n'est pas limitée à cette application et qu'elle pourrait être avantageusement utilisée avec tout autre article de mode comportant un dispositif électronique.

## Revendications

1. Pièce textile (10) comportant au moins deux couches textiles superposées l'une à l'autre et composées chacune de fibres, lesdites couches étant formées par :
- au moins une couche génératrice (12) d'énergie, dite « couche génératrice interne (12) », configurée pour générer un courant électrique à partir de contraintes mécaniques, et
- une couche de stockage (13) d'énergie destinée à alimenter un dispositif électronique en courant électrique, ladite couche de stockage (13) étant reliée électriquement à la couche génératrice interne (12) et configurée pour stocker le courant électrique ;
ladite pièce textile (10) étant **caractérisée en ce qu'**elle comporte en outre au moins une fibre d'excitation (124) comportant des billes (125) solidaires d'un corps (126) de ladite fibre, ladite fibre d'excitation (124) étant tissée avec la couche génératrice interne (12).

2. Pièce textile (10) selon la revendication 1, comprenant
une couche génératrice externe (11) configurée pour générer un courant électrique à partir d'un rayonnement lumineux,
la couche génératrice externe (11) étant superposée à la couche génératrice interne (12), elle-même étant superposée à la couche de stockage (13), lesdites couches génératrices externe (11) et interne (12) étant reliées électriquement à la couche de stockage (13).

3. Pièce textile (10) selon la revendication 2, dans laquelle la couche génératrice externe (11) comprend un ensemble de fibres constituant des cellules solaires (110) à pigment photosensible et des fibres conductrices (116) avec lesquelles sont tissées lesdites fibres constituant des cellules solaires (110).

4. Pièce textile (10) selon la revendication 2, dans laquelle la couche génératrice interne (12) est formée par un ensemble de nano-générateurs triboélectriques comprenant des ensembles actifs (120) tissés avec des fibres conductrices (123).

5. Pièce textile (10) selon l'une des revendications 1 à 4, dans laquelle la couche de stockage est constituée d'un ensemble de fibres formées par des batteries (130) comprenant chacune une cathode (131) filiforme et une anode (132) filiforme.

6. Article de mode **caractérisé en ce qu'**il comprend une pièce textile (10) selon l'une des revendications 1 à 5, ledit article comportant en outre un dispositif électronique configuré pour être alimenté en courant électrique par la couche de stockage (13).

7. Article de mode selon la revendication 6, dans lequel la couche de stockage (13) comporte un système de couplage inductif afin d'alimenter en courant électrique le dispositif électronique.

8. Montre **caractérisée en ce qu'**elle comprend un bracelet formé par au moins une pièce textile (10) selon l'une des revendications 1 à 5, et un mouvement horloger électronique ou électromécanique auquel est reliée la couche de stockage (13) afin d'alimenter ledit mouvement horloger en courant électrique.

## Patentansprüche

1. Textilstück (10), umfassend mindestens zwei übereinander angeordnete Textilschichten, die jeweils aus Fasern bestehen, wobei die genannten Schichten gebildet sind durch:
- mindestens eine Generatorschicht (12) zur Energieerzeugung, als "innere Generatorschicht (12)" bezeichnet, die dazu konfiguriert ist, aus mechanischen Belastungen einen elektrischen Strom zu erzeugen, und
- eine Speicherschicht (13) zur Speicherung von Energie, die dazu bestimmt ist, ein elektronisches Gerät mit elektrischem Strom zu versorgen, wobei die genannte Speicherschicht (13) elektrisch mit der inneren Generatorschicht (12) verbunden und dazu konfiguriert ist, den elektrischen Strom zu speichern;
wobei das Textilstück (10) **dadurch gekennzeichnet ist, dass** es ferner mindestens eine Anregungsfaser (124) umfasst, die Kugeln (125) aufweist, die fest mit einem Körper (126) der genannten Faser verbunden sind, wobei die Anregungsfaser (124) mit der inneren Generatorschicht (12) verwebt ist.

2. Textilstück (10) nach Anspruch 1, wobei das Textilstück eine äußere Generatorschicht (11) umfasst, die dazu konfiguriert ist, aus einer Lichtstrahlung einen elektrischen Strom zu erzeugen, wobei die äußere Generatorschicht (11) auf der inneren Generatorschicht (12) angeordnet ist, die ihrerseits auf der Speicherschicht (13) angeordnet ist, und wobei die genannten äußere Generatorschicht (11) und innere Generatorschicht (12) elektrisch mit der Speicherschicht (13) verbunden sind.

3. Textilstück (10) nach Anspruch 2, wobei die äußere Generatorschicht (11) einen Satz von Fasern umfasst, die Solarzellen (110) mit lichtempfindlichem Pigment bilden, und leitende Fasern (116), mit denen die genannten, die Solarzellen (110) bildenden Fasern verwebt sind.

4. Textilstück (10) nach Anspruch 2, wobei die innere Generatorschicht (12) durch eine Mehrzahl triboelektrischer Nanogeneratoren gebildet ist, die aktive Baugruppen (120) umfassen, die mit leitenden Fasern (123) verwebt sind.

5. Textilstück (10) nach einem der Ansprüche 1 bis 4, wobei die Speicherschicht aus einem Satz von Fasern besteht, die durch Batterien (130) gebildet sind, von denen jede eine fadenförmige Kathode (131) und eine fadenförmige Anode (132) umfasst.

6. Modeartikel, **dadurch gekennzeichnet, dass** er ein Textilstück (10) nach einem der Ansprüche 1 bis 5 umfasst, wobei der Artikel ferner ein elektronisches Gerät umfasst, das dazu konfiguriert ist, durch die Speicherschicht (13) mit elektrischem Strom versorgt zu werden.

7. Modeartikel nach Anspruch 6, wobei die Speicherschicht (13) ein System zur induktiven Kopplung umfasst, um das elektronische Gerät mit elektrischem Strom zu versorgen.

8. Uhr, **dadurch gekennzeichnet, dass** sie ein Armband umfasst, das durch mindestens ein Textilstück (10) nach einem der Ansprüche 1 bis 5 gebildet ist, und ein elektronisches oder elektromechanisches Uhrwerk, mit dem die Speicherschicht (13) verbunden ist, um das genannte Uhrwerk mit elektrischem Strom zu versorgen.

## Claims

1. Textile part (10) including at least two textile layers superimposed on one another and each consisting of fibres, said layers being formed by:
- at least one energy-generating layer (12), referred to as the inner generating layer (12), configured to generate an electric current from mechanical stresses, and
- an energy storage layer (13) for supplying an electronic device with an electric current, said storage layer (13) being electrically connected to the inner generating layer (12) and configured to store the electric current output thereby;
said textile part (10) being **characterised in that** it further includes at least one excitation fibre (124) including balls (125) integral with a body (126) of said fibre, said excitation fibre (124) being woven with the inner generating layer (12).

2. Textile part (10) according to claim 1, comprising an outer generating layer (11) configured to generate an electric current from light radiation, the outer generating layer (11) being superimposed on the inner generating layer (12), which in turn is superimposed on the storage layer (13), said outer generating layer (11) and inner generating layer (12) being electrically connected to the storage layer (13).

3. Textile part (10) according to claim 2, wherein the outer generating layer (11)comprises an array of fibres forming dye-sensitised solar cells (110) and conductive fibres (116) with which said solar cell-forming fibres (110) are woven.

4. Textile part (10) according to claim 2, wherein the inner generating layer (12) is formed by an array of triboelectric nanogenerators comprising active assemblies (120) woven with conductive fibres (123).

5. Textile part (10) according to one of claims 1 to 4, wherein the storage layer is constituted by an array of fibres formed by batteries (130), each comprising a wire cathode (131) and a wire anode (132).

6. Fashion item **characterised in that** it comprises a textile part (10) according to one of claims 1 to 5, said item further including an electronic device configured to be supplied with electric current by the storage layer (13).

7. Fashion item according to claim 6, wherein the storage layer (13) includes an inductive coupling system in order to supply electric current to the electronic device.

8. Watch **characterised in that** it comprises a bracelet formed by at least one textile part (10) according to one of claims 1 to 5, and an electronic or electromechanical horological movement to which the storage layer (13) is connected in order to supply said horological movement with an electric current.
